(19) Europäisches Patentamt
European Patent Office
Office européen des brevets

(11) **EP 1 998 573 A2**

(12) **EUROPEAN PATENT APPLICATION**

(43) Date of publication:
**03.12.2008 Bulletin 2008/49**

(51) Int Cl.:
**H04N 13/00** $^{(2006.01)}$

(21) Application number: **08153918.1**

(22) Date of filing: **01.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.05.2007 US 755744**
**02.01.2008 US 968201**

(71) Applicant: **ARISAWA MFG. CO., LTD.**
**Joetsu-shi,**
**Niigata 943-8610 (JP)**

(72) Inventors:
• **Oyamada, Masahiro**
  **c/o ARISAWA MFG. CO., LTD.**
  **Niigata, Niigata 943-8610 (JP)**
• **Tamura, Yoshiyuki**
  **c/o ARISAWA MFG. CO., LTD.**
  **Niigata, Niigata 943-8610 (JP)**

(74) Representative: **Tetzner, Michael et al**
**Anwaltskanzlei Dr. Tetzner**
**Van-Gogh-Strasse 3**
**81479 München (DE)**

(54) **Stereoscopic display and phase different plate**

(57) A stereoscopic display is provided. The stereoscopic display includes: an image displaying section that generates a right eye image and a left eye image and emits the same; and a phase differential plate disposed on an exit side of the image displaying section that orthogonalizes to each other or rotates reversely the polarizing directions of the right eye image and the left eye image which are incident from the image displaying section and emits the same. The phase differential plate is disposed on the image displaying section side and has an image light-antireflective film that prevents the right eye image light and the left eye image light from reflecting from the image displaying section.

100

F I G . 1

EP 1 998 573 A2

**Description**

BACKGROUND

1. TECHNICAL FIELD

The present invention relates to a stereoscopic display and a phase differential plate. Particularly, the present invention relates to a stereoscopic display and a phase differential plate being capable of reducing crosstalk.

2. RELATED ART

A stereoscopic image display apparatus that enables a right eye image and a left eye image to enter into the right eye and the left eye of a viewer, respectively by utilizing parallax of the right eye and the left eye has been known as disclosed, for example, in 1)Japanese Patent No.3192994 and 2)Japanese Patent No.3258996. The stereoscopic image display apparatus includes a liquid crystal panel as an image display panel and a parallax barrier as an optical separating means that separates the left and right images which are in contact with each other on the surface of the liquid crystal panel. On the liquid crystal panel, right eye images and left eye images are alternately displayed in a line. The parallax barrier is such as a stripe opaque film and separates the right eye image and the left eye image.

However, light spreads and reflects from a plane having different refractive index, so that a part of image light exiting from the liquid crystal panel is reflected on the surface of the parallax barrier on the liquid crystal panel side, and then, the reflected light is further reflected on the liquid crystal panel and incident on the parallax barrier again. In this case, a part of the light being incident on again is incident on a pixel adjacent to the pixel of the opposed parallax barrier. Therefore, an effect that the right eye image is separated for the left eye at the parallax barrier and the right eye image which has been separated for the left eye is incident on the left eye of a viewer, a so called cross talk occurs.

Here, it has been described that an antireflective coating is provided on the surface of a polarizing plate of the liquid crystal panel in the above described patent documents 1) and 2). However, the coating is a glare-proof film formed by depositing such as $MgF_2$ on a glass substrate, and scatters the incident light. Therefore, the reflected and scattered light is incident on the parallax barrier again, and rather the crosstalk may be increased.

SUMMARY

Accordingly, it is an advantage of the invention to provide a stereoscopic display and a phase differential plate which are capable of solving the above-mentioned problem. This advantage may be achieved through the combination of features described in independent claims of the invention. Dependent claims thereof specify preferable embodiments of the invention.

Thus, a first aspect of the present invention provides a stereoscopic display including: an image displaying section that generates a right eye image and a left eye image and emits the same; and a phase differential plate disposed on an exit side of the image displaying section that orthogonalizes to each other or rotates reversely the polarizing directions of the right eye image and the left eye image which are incident from the image displaying section and emits the same. The phase differential plate is disposed on the image displaying section side and has an image light-antireflective film that prevents the right eye image and the left eye image from reflecting from the image displaying section.

A second aspect of the present invention provides a phase differential plate disposed on the exit side of an image displaying section which generates a right eye image and a left eye image and emits the same. The phase differential plate includes: a phase differential section that orthogonalizes to each other or rotates reversely the polarizing directions of the right eye image and the left eye image which are incident from the image displaying section; and an image light-antireflection film disposed on the image displaying section side of the phase differential section that prevents the right eye image light and the left eye image light from reflecting from the image displaying section.

Here, all necessary features of the present invention are not listed in the summary of the invention. The sub-combinations of the features may become the invention.

BRIEF DESCRIPTION OF THE DRAWINGS

Fig.1 is an exploded perspective view showing a stereoscopic display 100;

Fig.2 is a schematic diagram showing a usage state of the stereoscopic display 100;

Fig.3 is a partial enlarged side view showing a display panel 130 and a phase differential plate 180;

Fig.4 is an enlarged side view showing a part of an outside light-antireflection film 310;

Fig.5 is an enlarged side view showing a part of an image light-antireflection film 320;

Fig.6 is an enlarged side view showing a part of the stereoscopic display 100 according to another embodiment;

and

Fig.7 is an exploded perspective view showing another stereoscopic display 101.

DESCRIPTION OF EXEMPLARY EMBODIMENTS

Hereinafter, the present invention will now be described through preferred embodiments. The embodiments do not limit the invention according to claims and all combinations of the features described in the embodiments are not necessarily essential to means for solving the problems of the invention.

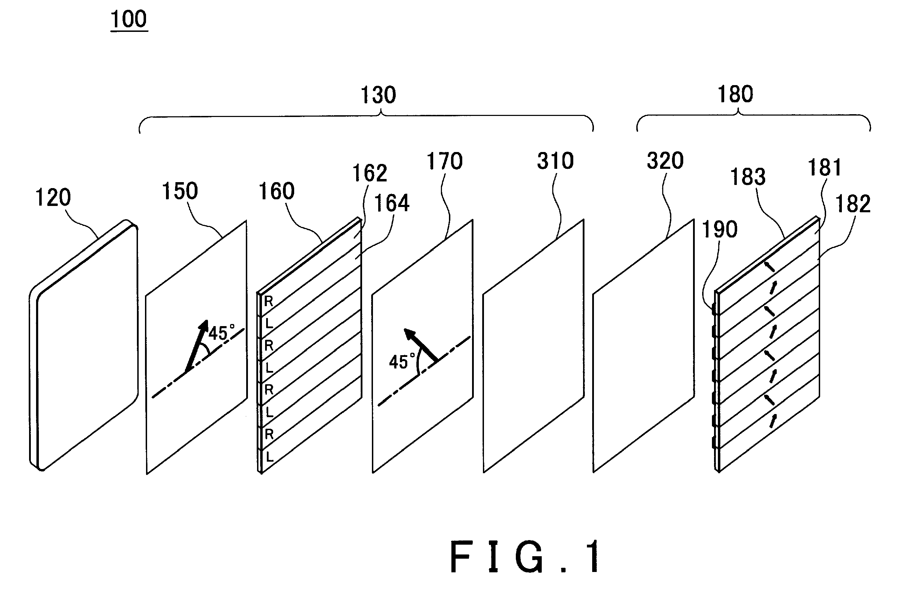

Fig.1 is an exploded perspective view showing a stereoscopic display 100 manufactured by a manufacturing method according to the present embodiment. The stereoscopic display 100, which is an example of an image displaying section, includes a light source 120, a display panel 130 and a phase differential plate 180 in the described order as shown in Fig.1. The display panel 130 includes a polarizing plate 150, an image generating section 160, a polarizing plate 170 and an outside light-antireflection film 310. The phase differential plate 180 includes an image light-antireflection film 320 and a phase differential section 183. A viewer 500 described later views a stereoscopic image displayed on the stereoscopic display 100 from right side of the phase differential plate 180 in Fig.1.

The light source 120 is arranged on the innermost of the stereoscopic display 100 from the viewpoint of the viewer 500 and emits a white non-polarized light to one surface of the polarizing plate 150 in using the stereoscopic display 100. Here, the light source 120 is a surface illuminant in the present embodiment, however, the light source 120 may be a combination of such as a point light source and a condenser lens instead of the surface illuminant. An example of the condenser lens is a Fresnel lenssheet.

The polarizing plate 150 is provided on the image generating section 160 on the light source 120 side. The polarizing plate 150 has a transmission axis and a absorption axis orthogonalizied to the transmission axis, and when non-polarized light emitted from the light source 120 is incident thereon, transmits light having the polarization axis in parallel with the transmission axis direction among the non-polarized light but blocks light having the polarization axis in parallel with the absorption axis direction. Here, the polarization axis direction is a direction to which light oscillates in the electric field. The transmission axis direction of the polarizing plate 150 is the direction toward the upper right having the angle of 45 degrees with the horizontal direction when the viewer 500 views the stereoscopic display 100 shown as an arrow in Fig.1.

The image generating section 160 has right eye image generating regions 162 and left eye image generating regions 164. Each of the right eye image generating regions 162 and the left eye image generating regions 164 is obtained by dividing the image generating section 160 by the horizontal direction, and a plurality of right eye image generating regions 162 and left eye image generating regions 164 are alternately arranged in the vertical direction as shown in Fig.1.

In using the stereoscopic display 100, a right eye image is generated in each right eye image generating region 162 and a left eye image is generated in each left eye image generating region 164 in the image generating section 160, respectively. At this time, light transmitted through the polarizing plate 150 is incident on the right eye image generating region 162 and the left eye image generating region 164 in the image generating section 160, and then, the light transmitted through the right eye image generating region 162 becomes an image light of the right eye image (hereinafter referred to as a right eye image light) and the light transmitted through the left eye image generating region 164 becomes an image light of the left eye image (hereinafter referred to as a left eye image light).

Here, each of the right eye image light transmitted through the right eye image generating region 162 and the left eye image light transmitted through the left eye image generating region 164 is linear polarized light having the polarization axis in a specified direction. Here, each of the polarization axes in the specified direction may be in the same direction each other. For example, each polarization axis is in the same direction as that of the transmission axis of the polarizing plate 170 described later in Fig.1. In such image generating section 160, a plurality of small cells are arranged in a matrix in a plane in the horizontal direction and the vertical direction, for example, and a LCD (liquid crystal display) in which liquid crystal is sealed in each cell sandwiched between oriented films is used. Each cell is electrically driven in the LCD, so that each cell switches between a state that the light is transmitted therethrough without changing the direction of the polarization axis and a state that the light is transmitted therethrough with rotating the direction of the polarization axis by 90 degrees.

The polarizing plate 170 is provided in the image generating section 160 on the viewer 500 side. When the right eye image light transmitted through the right eye image generating region 162 and the left eye image light transmitted through the left eye image generating region 164 are incident thereon, the polarizing plate 170 transmits the light of which polarization axis is in parallel with the transmission axis but blocks the light of which polarization axis is in parallel with the absorption axis among the incident lights. Here, the direction of the transmission axis of the polarizing plate 170 is 45 degrees upper left direction from the horizontal direction when the viewer 500 views the stereoscopic display 100 shown as the arrow in Fig.1.

The phase differential plate 180 includes a phase differential section 183, a light blocking section 190 and an image light-antireflection film 320.

The phase differential section 183 includes first polarizing regions 181 and second polarizing regions 182. The size and the position for each of the first polarizing regions 181 and each of the second polarizing regions 182 in the phase differential plate 180 are corresponding to those of the right eye image generating region 162 and the left eye image generating region 164 in the image generating section 160 as shown in Fig.1. Therefore, in using the stereoscopic display 100, the right eye image light transmitted through the right eye image generating region 162 is incident on the first polarizing region 181 and the left eye image light transmitted through the left eye image generating region 164 is incident on the second polarizing region 182. In addition, the light blocking section 190 is provided on each boundary between the first polarizing regions 181 and the second polarizing regions 182 on the surface facing the image displaying section 130 of the phase differential section183. The light blocking section 190 absorbs and blocks the image light over the boundary and incident on the first polarizing region 181 among the left eye image light to be incident on the second polarizing region 182 adjacent to the first polarizing region 181 in the phase differential section 183. In the same way, the light blocking section 190 absorbs and blocks the image light over the boundary and incident on the second polarizing region 182 among the right eye image light to be incident on the first polarizing region 181 adjacent to the second polarizing region 182 in the phase differential section 183. Thus, the light blocking section 190 is provided on each boundary on the phase differential section 183, so that cross talk is less likely to occur in the right eye image light and the left eye image light emitted from the stereoscopic display 100.

In addition, an adhesive resin is applied to each light blocking section 190 to attach the image light-antireflection film 320 thereto. The refractive index of the resin is about 1.3. Here, the image light-antireflection film 320 will be described later.

The first polarizing region 181 does not rotate the polarization axis of the incident right eye image light but directly transmits therethrough. Meanwhile, the second polarizing region 182 rotates the polarization axis of the incident left eye image light to the direction orthogonalized to the polarization axis of the right eye image light incident on the first polarizing region 181. Therefore, the direction of the polarization axis of the right eye image light transmitted through the first polarizing region 181 and that of the polarization axis of the left eye image light transmitted through the second polarizing region 182 are orthogonalized to each other shown as the arrows in Fig.1. Here, the arrows of the phase differential plate 180 shown in Fig.1 indicate the polarization axes of the polarized light transmitted through the phase differential plate 180. A transparent glass or resin is used for each first polarizing region 181, and a half wave retarder having an optical axis having the angle of 45 degrees with the direction of the polarization axis of the incident left eye image light is used for each second polarizing region 182, for example. The direction of the optical axis of the second polarizing region 182 is the horizontal direction or the vertical direction in the embodiment shown in Fig.1. Here, the optical axis means either the phase advance axis or the phase delay axis when light is transmitted through the second polarizing region 182.

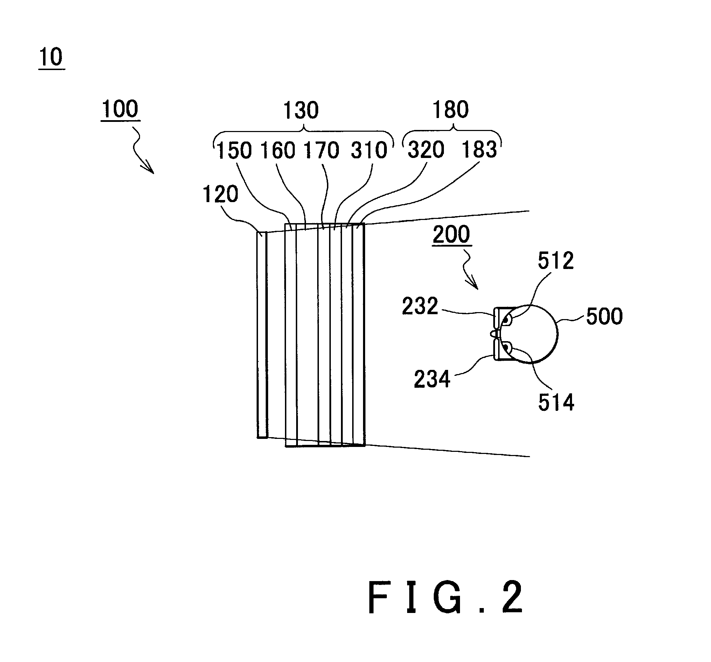

Fig.2 is a schematic diagram showing a usage state of the stereoscopic display 100. Viewing a stereoscopic image through the stereoscopic display 100, the viewer 500 views the right eye image light and the left eye image light projected from the stereoscopic display 100 with a polarized glasses 200 as shown in Fig.2. When the viewer 500 wears the polarized glasses 200, a right eye image transmitting section 232 is disposed at the position for a right eye 512 side and a left eye image transmitting section 234 is disposed at the position for a left eye 514 side of the viewer 500. Each of the right eye image transmitting section 232 and the left eye image transmitting section 234 is a polarizing lens having a specified transmission axis direction different from each other and fixed to a frame of the polarized glasses 200.

The right eye image transmitting section 232 is a polarizing plate of which transmission axis direction is the same as that of the right eye image light transmitted through the first polarizing region 181 and of which absorption axis direction is orthogonalized to the transmission axis direction. Meanwhile, the left eye image transmitting section 234 is a polarizing plate of which transmission axis direction is the same as that of the left eye image light transmitted through the second polarizing region 182 and of which absorption axis direction is orthogonalized to the transmission axis direction. For each of the right eye image transmitting section 232 and the left eye image transmitting section 234, a polarizing lens to which a polarizing film obtained by uniaxially drawing a film impregnating dichromatic dye is attached is used, for example.

Viewing a stereoscopic image through the stereoscopic display 100, the viewer 500 views the stereoscopic display 100 with the polarized glasses 200 as described above within a range in which the right eye image light and the left eye image light transmitted through the first polarizing region 181 and the second polarizing region 182, respectively in the phase differential plate 180 are emitted, so that the right eye 512 can view only the right eye image light and the left eye 514 can view only the left eye image light. Therefore, the viewer 500 can perceive the right eye image light and left eye image light as a stereoscopic image.

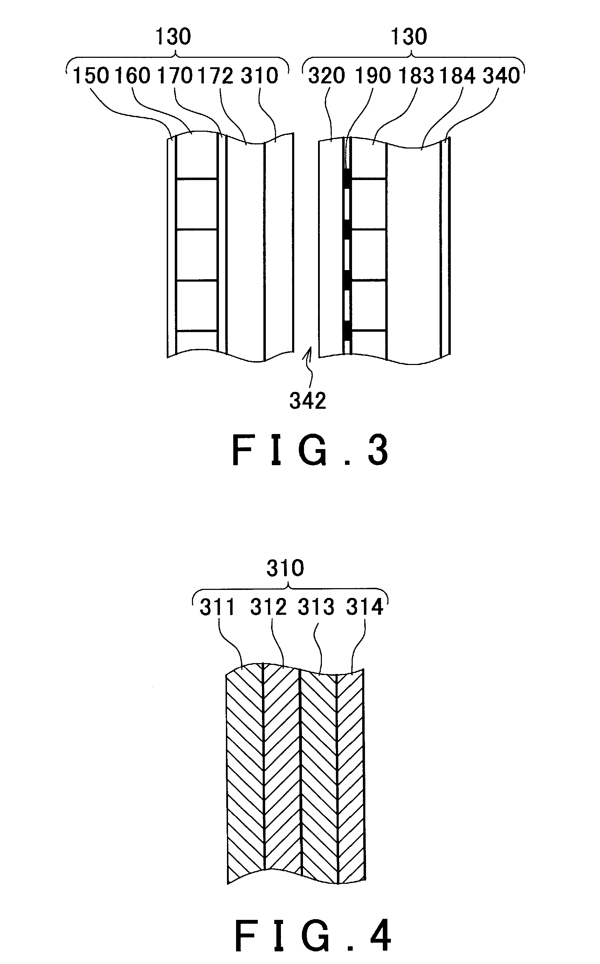

Fig.3 is an enlarged side view showing a display panel 130 and a phase differential plate 180. The display panel 130 supports the polarizing plate 150, image generating section 160 and the polarizing plate 170 which are arranged in order from the light source 120 side and has a glass substrate 172 which protects them. In addition, the display panel 130 is disposed on the exit side from which an image light is emitted of the glass substrate 172, i.e. the differential plate 180 side and has an outside light-antireflection film 310 that prevents an outside light from reflecting. The outside light-antireflection film 310 is a single layer film or a multilayer film having the refractive index which is medium index of those of the glass substrate 172 and air. Here, if the antireflection film is a multilayer film, it is preferred that layers of the film are laminated such that the refractive index is decreased in the direction from the glass substrate 172 to the air.

The phase differential plate 180 has a glass substrate 184 that supports the phase differential section 183 and protects them. In addition, the phase differential plate 180 has an image light-antireflection film 320 disposed on the image light-incident side of the phase differential section 183 (the display panel 130 side) that prevents an image light from reflecting from the display panel 130, and an outside light-antireflection film 340 disposed on an image light-exit side of the glass substrate 184 that prevents an outside light from reflecting. The image light-antireflection film 320 is a single layer or a multilayer film having the refractive index which is medium index of those of the phase differential section 183 and air. Here, if the image light-antireflection film 320 is a multilayer film, it is preferred that layers of the film are laminated such that the refractive index is decreased in the direction from the phase differential section 183 to the air. In the same way, the outside light-antireflection film 340 is a single layer or a multilayer film having the refractive index which is medium index of those of the glass substrate 184 and air. Here, if the outside light-antireflection film 340 is a multilayer film, it is preferred that layers of the film are laminated such that the refractive index is decreased in the direction from the glass substrate 184 to the air. In the embodiment shown in Fig.3, the display panel 130 and the phase differential plate 180 are separated via a gap 342.

Fig.4 is an enlarged side view showing a part of an outside light-antireflection film 310. The outside light-antireflection film 310 includes a transparent resin substrate 311, a hard court 312, a high refractive index layer 313 and a low refractive index layer 314 in the order from the glass substrate 172 side to the gap 342 side. For example, the transparent resin substrate 311 has the refractive index of 1.49 and the thickness of $80\mu m$, the hard court 312 has the refractive index of 1.49 and the thickness of $1\mu m$, the high refractive index layer 313 has the refractive index of 1.67 and the thickness of 100nm, and the low refractive index layer 314 has the refractive index of 1.43 and the thickness of 105nm. The outside light-antireflection film 310 may be formed independent of the image generating section 160 and the glass substrate 172 and attached to the glass substrate 172, or the glass substrate 172 may be directly coated with the outside light-antireflection film 310. Thereby even if the display panel 130 is used without the phase differential plate 180, an outside light is prevented from reflecting on the display panel 130, so that the viewer 500 can view a clear image.

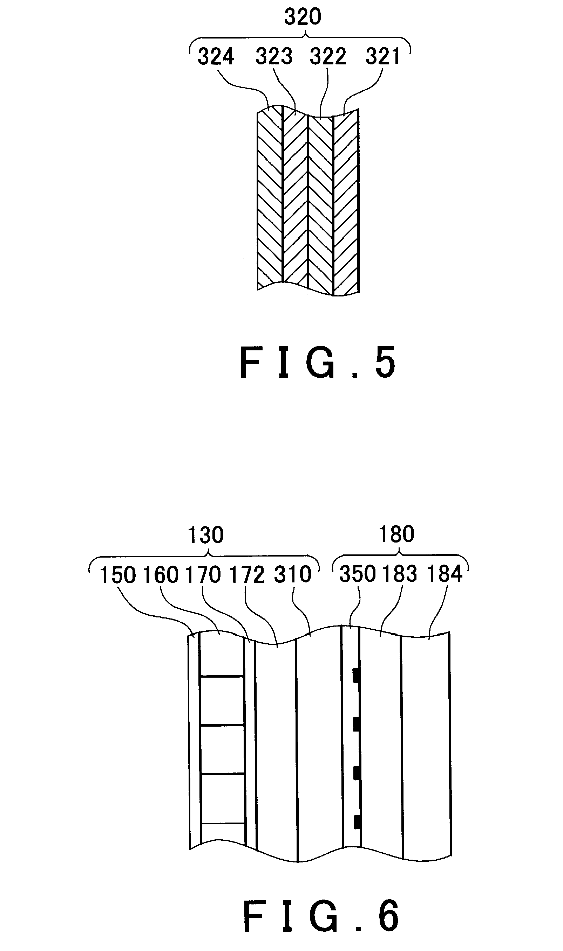

Fig.5 is an enlarged side view showing a part of an image light-antireflection film 320. The image light-antireflection film 320 includes a transparent resin substrate 321, a hard court 322, a high refractive index layer 323 and a low refractive index layer 324 in the order from the phase differential section 183 side to the gap 342 side. For example, the image light-antireflection film 320 may have the same configuration as the outside light-antireflection film 310.

Here, crosstalk may occur due to the light reflected between the display panel 130 and the phase difference plate 180. Most of the right eye image light emitted from a specified right eye image generating region 162 of the display panel 130 is incident on the first polarizing region 181 of the phase differential plate 180 which faces the display panel 130. However, the light spreads and reflects from a plane having the different refractive index. Therefore, a part of light emitted from the right eye image generating region 162 reflects from the phase differential plate 180 and the reflected light further reflects from the display panel 130, and then, the further reflected light is incident on the second polarizing region 182 adjacent to the first polarizing light region 181, thereby crosstalk occurs. Thus, the image light-antireflection film 320 is provided on the incident side of the phase differential plate 180 on which an image light is incident in the present embodiment. Thereby the image light incident on the phase differential plate 180 from the display panel 130 is prevented from reflecting to reduce crosstalk generated between the first polarizing regions 181 and the second polarizing region 182 adjacent to each other. In this case, if the outside light-anti reflection film 310 of the display panel 130 and the image light-antireflection film 320 of the phase differential plate 180 are partially in contact with each other, an optical interference pattern could occur. Therefore, it is preferred that the outside light-antireflection film 310 and the image light-antireflection film 320 are spaced from each other via the gap 342. A method for spacing the outside light-antireflection film 310 and the image light-antireflection film 320 from each other may include: spraying liquid that is prepared by dispersing in organic solvent spacer material such as silica beads or the like of a few to tens of microns in diameter onto a surface of the outside light-antireflection film 310 or the image light-antireflection film 320 with a sprayer or the like; evaporating the solvent; and then coupling them with each other.

The outside light-antireflection film 340 of the phase differential plate 180 may have the same configuration as the image light-antireflection film 320 shown in Fig.4. The outside light-antireflection film 340 may be formed independent of the phase differential section 183 and the glass substrate 184 and attached to the glass substrate 184, or the glass substrate 184 may be directly coated with the outside light anti-reflection film 340. Thereby when the phase differential plate 180 is disposed on the exit side of the display panel 130, an outside light is prevented from reflecting on the phase difference plate 180, so that the viewer 500 can view a clear image.

<Example 1>

A crosstalk value of the stereoscopic display 100 having the components shown in Table 1 is measured. In Table 1, each circle in the column indicates that each of the display panel 130 and the phase differential plate 180 has the component. Each blank column indicates that each of the display panel 130 and the phase differential plate 180 does not have the component. The stereoscopic display 100 of Example 1 includes the outside light-antireflection film 310, the image light-antireflection film 320 and the light blocking section 190. Here, the crosstalk value is calculated as follows by using Cn defined by the following (1)-(3).

$$Cn=(Cn_L+Cn_R)/2 \qquad (1)$$

$$Cn_L=(Rw_L-B_L)/(Lw_L-B_L)\times100\% \qquad (2)$$

$$Cn_R=(Lw_R-B_R)/(Rw_R-B_R)\times100\% \qquad (3)$$

Here, n indicates n-th screen region when the screen region of the stereoscopic display 100 is divided into N. $B_L$ indicates luminance at viewing the left eye image light through the left eye image transmission section 234 provided that both of the right eye image light and the left eye image light are black in n-th screen region. $Lw_L$ indicates luminance at viewing the image light through the left eye image transmission section 234 provided that the right eye image light is black and the left eye image light is white in n-th screen region. $Rw_L$ indicates luminance at viewing the image light through the left eye image transmission section 234 provided that the right eye image light is white and the left eye image light is black in n-th screen region. In the same way, $B_R$ indicates luminance at viewing the image light through the right eye image transmission section 232 provided that both of the right eye image light and the left eye image light are black in n-th screen region. $Lw_R$ indicates luminance at viewing the image light through the right eye image transmission section 232 provided that the right eye image light is black and the left eye image light is white in n-th screen region. $Rw_R$ indicates luminance at viewing the image light through the right eye image transmission section 232 provided that the right eye image light is white and the left eye image light is black in n-th screen region. The viewing position is away from the center of the screen of the stereoscopic display 100 of 24-inch by about 700-1000mm. Under this state, crosstalk value C for the whole screen is measured by dividing the screen region into nine, measuring Cn for each image region n and averaging the same.

<Table 1>

| EXAMPLE NO. | DISPLAY PANEL 130 | | PHASE SHIFT PLATE 180 | | | RESULT | |
|---|---|---|---|---|---|---|---|
| | OUTSIDE LIGHT-ANTIREFLECTION FILM 310 | GLARE-PROOF FILM | IMAGE LIGHT-ANTIREFLECTION FILM 320 | LIGHT BLOCKING SECTION 190 | OUTSIDE LIGHT-ANTIREFLECTION FILM 340 | CROSSTALK VALUE (%) | DETERMINATION OF EFFECT |
| EXAMPLE 1 | ○ | | ○ | ○ | | 0.4~0.9 | ◎ |
| EXAMPLE 2 | ○ | | ○ | ○ | ○ | 0.3~0.7 | ◎ |
| EXAMPLE 3 | | | ○ | ○ | | 0.7~1.3 | ○ |
| EXAMPLE 4 | | ○ | ○ | ○ | | 2.1~2.9 | Δ |
| EXAMPLE 5 | ○ | | ○ | | | 0.7~1.4 | ○ |
| COMPARATIVE EXAMPLE 1 | ○ | | | ○ | | 3.8~4.4 | × |

EP 1 998 573 A2

<Example 2>

The stereoscopic display 100 of Example 2 has the same configuration as the stereoscopic display 100 of the Example 1 except for further including an outside light-antireflection film 340.

<Example 3>

The stereoscopic display 100 of Example 3 has the same configuration as the stereoscopic display 100 of the Example 1 except for not including the outside light-antireflection film 310.

<Example 4>

The stereoscopic display 100 of Example 4 has the same configuration as the stereoscopic display 100 of the Example 1 except for including a glare-proof film instead of the outside light-antireflection film 310. The glare-proof film disperses a reflected light and is formed by providing a $MgF_2$ film having the refractive index of 1.38 on both sides of the glass substrate.

<Example 5>

The stereoscopic display 100 of Example 5 has the same configuration as the stereoscopic display 100 of the Example 1 except for not including the light blocking section 190.

< Comparative example 1>

In the Comparative example 1, the stereoscopic display 100 having the same configuration as the stereoscopic display 100 of the Example 1 except for not including the image light-antireflection film 320 is used.
Comparing the crosstalk value of the Examples 1-5 with the crosstalk value of the Comparative example 1 shown in Table 1, it is understood that the crosstalk value is reduced by providing the image light-antireflection film 320 on the surface of the phase differential plate 180 which faces the display panel 130. Moreover, it is understood that the crosstalk value is further reduced by providing the outside light-antireflection film 310 on the surface of the display panel 130 which faces the phase differential plate 180. In addition, it is understood that preferably any glare-proof film is not provided on the surface of the display panel 130 which faces the phase differential plate 180.
Fig.6 is an enlarged side view showing a part of the stereoscopic display 100 according to another embodiment. In the stereoscopic display 100 shown in Fig.6, the components the same as those of the stereoscopic display 100 shown in Fig.1-Fig.5 have the same reference numerals as the stereoscopic display 100 shown in Fig.1-Fig.5, so that the description is omitted.
The stereoscopic display 100 shown in Fig.6 includes a resin 350 instead of the image light-antireflection film 320 of the stereoscopic display 100 shown in Fig.1-Fig.5. An image light-antireflection film of the stereoscopic display 100 shown in Fig.6 is formed by filling the gap between the glass substrate 184 of the phase differential plate 180 and the outside light-antireflection film 310 of the display panel 130 with the resin 350. Thereby the number of components can be reduced. An example of the resin 350 is adhesive having the refractive index of about 1.3. In addition, even if there is no gap 342, any optical interference pattern does not occur, and further, the phase differential plate 180 can be brought close to the display panel 130 without generating an optical interference pattern. Therefore, crosstalk can be further reduced.

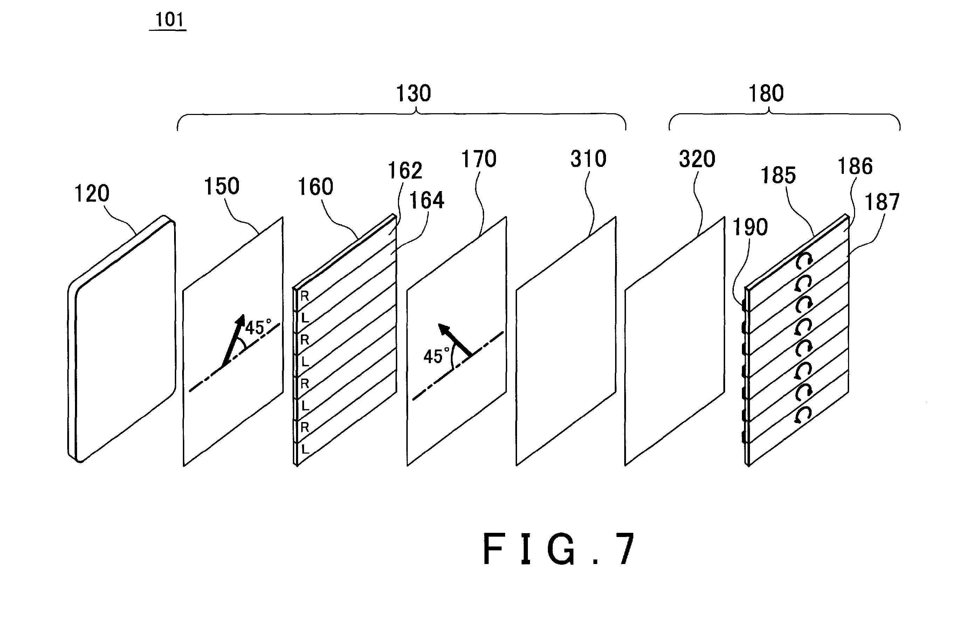

Fig.7 is an exploded perspective view showing another stereoscopic display 101 manufactured by the manufacturing method according to the present embodiment. In the stereoscopic display 101 shown in Fig.7, the components the same as those of the above-described stereoscopic display 100 have the same reference numerals as the stereoscopic display 100, so that the description is omitted. The stereoscopic display 101 includes a phase differential section 185 instead of the phase differential section 183 of the above-described stereoscopic display 100 as shown in Fig.7. The phase differential section 185 includes first polarizing regions 186 and second polarizing regions 187. Here, both of the first polarizing regions 186 and the second polarizing regions 187 are quarter wave retarders, and each optical axis thereof is orthogonalized to each other. The position and the size of each of the first polarizing regions 186 and the second polarizing regions 187 of the phase differential section 185 are corresponding to those of the right eye image generating region 162 and the left eye image generating region 164 of the image generating section 160 as well as those of the first polarizing region 181 and the second polarizing region 182 of the phase differential section 183. Therefore, the right eye image light transmitted through the right eye image generating region 162 is incident on the first polarizing region 186 and the left eye image light transmitted through the left eye image generating region 164 is incident on the second polarizing region 187 in using the stereoscopic display 101.

The phase differential section 185 emits the incident lights as circularly polarized lights of which polarization axes are rotated in the direction opposite to each other. For example, the first polarizing region 186 emits the incident light as a clockwise circularly polarized light, and the second polarizing region 187 emits the incident light as a counterclockwise polarized light. Here, the arrows of the phase differential section 185 in Fig.7 indicate the rotating direction of the polarized light through the phase differential section 185. A quarter wave retarder having the horizontal optical axis is used for each first polarizing region 186, and a quarter wave retarder having the vertical optical axis is used for each second polarizing region 187, for example.

Further, as shown in Fig.1, an image light-antireflection film 320 is provided on the surface of the phase differential section 185 which faces the display panel 130 in the phase differential plate 180, and an outside light-antireflection film 310 is provided on the surface of the polarizing plate 170 which faces the phase differential plate 180 in the display panel 130. Thereby the image light incident on the phase differential plate 180 from the display panel 130 can be prevented from reflecting, and the crosstalk occurring between the first polarizing region 186 and the second polarizing region 187 adjacent to each other can be reduced as well as the stereoscopic display 100 shown in Fig.1.

In order to view the stereoscopic display 101 having the phase differential section 185 shown in Fig.7, the viewer 500 wears polarized glasses (not shown in the figure) including quarter wave retarders and polarizing lenses which are disposed at the positions for the right eye 512 and the left eye 514, respectively. The optical axis of the quarter wave retarder disposed at the position for the right eye 512 side of the viewer 500 is in the horizontal direction. Meanwhile, the optical axis of the quarter wave retarder disposed at the position for the left eye 514 side of the viewer 500 is in the vertical direction. In addition, the transmission axis direction of each of the polarizing lens disposed at the position for the right eye 512 and the polarizing lens disposed at the position for the left eye 514 of the viewer 500 has the angle of 45 degrees to the right from the viewpoint of the viewer 500, and the absorption axis direction is orthogonalized to the transmission direction.

In the case that the viewer 500 views the stereoscopic display 101 with the polarized glasses, when a circularly polarized light of which polarization axis is rotated clockwise from the view point of the viewer 500 is incident thereon, the circularly polarized light is transformed to a linear polarized light having the angle of 45 degrees to the right by the quarter wave retarder of which optical axis is in the horizontal direction, transmitted through the polarizing lens and viewed by the right eye 512 of the viewer 500. Meanwhile, when a circularly polarized light of which polarization axis is rotated counterclockwise from the view point of the viewer 500 is incident thereon, the circularly polarized light is transformed to a linear polarized light having the angle of 45 degrees to the right by the quarter wave retarder of which optical axis is in the vertical direction, transmitted through the polarizing lens and viewed by the left eye 514 of the viewer 500. Thus, the stereoscopic displaying apparatus 101 is viewed with the polarized glasses, so that the right eye 512 can view only the right eye image light and the left eye 514 can view only the left eye image light. Therefore, the viewer 500 can perceive the right eye image light and the left eye image light as a stereoscopic image.

In addition, the stereoscopic display 100 may have a diffuser panel that diffuses the right eye image light and the left eye image light transmitted through each first polarizing region 181 and each second polarizing region 182 in at least one direction of the horizontal direction or the vertical direction on the viewer 500 side, i.e. the right side of the phase differential plate 180 in Fig.1. For such diffuser panel, a lenticular lens sheet on which plurality of convex lenses (cylindrical lenses) are extended in the horizontal direction or the vertical direction, or a lens array sheet on which a plurality of convex lenses are arranged on a plane is used, for example.

While the present invention has been described with the embodiment, the technical scope of the invention not limited to the above described embodiment. It is apparent to persons skilled in the art that various alternations and improvements can be added to the above-described embodiment. It is apparent from the scope of the claims that the embodiment added such alternation or improvements can be included in the technical scope of the invention.

**Claims**

**1.** A stereoscopic display comprising:

an image displaying section that generates a right eye image and a left eye image and emits the same; and
a phase differential plate disposed on an exit side of the image displaying section that orthogonalizes to each other or rotates reversely the polarizing directions of the right eye image and the left eye image which are incident from the image displaying section and emits the same, wherein
the phase differential plate includes an image light-antireflection film disposed on the image displaying section side that prevents the right eye image and the left eye image from reflecting from the image displaying section.

**2.** The stereoscopic display as set forth in Claim 1, wherein the image displaying section includes on the exit side an outside light-antireflection film that prevents the outside light from reflecting.

3. The stereoscopic display as set forth in Claim 2, wherein the phase differential plate further includes on the exit side an outside light-antireflection film that prevents the outside light from reflecting.

4. The stereoscopic display as set forth in Claim 1, wherein the phase differential plate and the image displaying section are spaced from each other.

5. The stereoscopic display as set forth in Claim 1, wherein the image light-antireflection film is formed by filling a gap between the phase differential plate and the image displaying section with resin.

6. The stereoscopic display as set forth in Claim 5, wherein the image displaying section includes on the exit side an outside light-antireflection film that prevents the outside light from reflecting.

7. A phase differential plate disposed on the exit side of an image displaying section which generates a right eye image and a left eye image and emits the same, comprising:

   a phase differential section that orthogonalizes to each other or rotates reversely the polarizing directions of the right eye image and the left eye image which are incident from the image displaying section; and
   an image light-antireflection film disposed on the image displaying section side of the phase differential section that prevents the right eye image and the left eye image from reflecting from the image displaying section.

100

130

180

120  150  160  162  170  310  320  183 181
              164                    190    182

R
L
R
L        45°        45°
R
L
R
L

EP 1 998 573 A2

F I G . 1

10

100

130          180

150 160 170 310  320 183

120

200

512

232          500

234

514

EP 1 998 573 A2

# FIG.2

130

130

150 160 170 172 310

320 190 183 184 340

342

F I G . 3

310

311 312 313 314

F I G . 4

EP 1 998 573 A2

320

324   323   322   321

# F I G . 5

130                          180

150 160 170 172 310   350 183 184

# F I G . 6

F I G . 7

EP 1 998 573 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3192994 B

- JP 3258996 B